# EUROPEAN PATENT APPLICATION

(11) **EP 3 578 892 A1**
(43) Date of publication of application: **11.12.2019**
(21) Application number: 17914567.7
(22) Date of filing: 10.10.2017
(51) Int. Cl.: F24F 11/00

(54) **FRESH AIR BLOWER AND CONTROL METHOD AND APPARATUS THEREFOR**

(30) Priority: 21.06.2017 CN 201710475715
(71) Applicant: GD Midea Heating & Ventilating Equipment Co., Ltd., Foshan, Guangdong 528311 (CN); Midea Group Co., Ltd., Foshan, Guangdong 528311 (CN)
(72) Inventor: WAN, Yongqiang, Foshan Guangdong 528311 (CN); XU, Yongfeng, Foshan Guangdong 528311 (CN); XIONG, Meibing, Foshan Guangdong 528311 (CN); LI, Bo, Foshan Guangdong 528311 (CN); SHU, Wentao, Foshan Guangdong 528311 (CN); QIAN, Xiaolong, Foshan Guangdong 528311 (CN); CHEN, Rufeng, Foshan Guangdong 528311 (CN)
(74) Representative: Lam, Alvin
(86) International application number: PCT/CN2017/105569
(87) International publication number: WO 2018/233147

(57) **Abstract**

A control apparatus for a fresh air blower, the apparatus comprising an air blower module and an air blower module radiator arranged corresponding to the air blower module. Further disclosed is a control method for a fresh air blower, the method comprising the following steps: (S1) acquiring a current operation mode of a fresh air blower and determining whether the current operation mode is a refrigeration mode or an air supply mode; (S2) if the current operation mode is the refrigeration mode or the air supply mode, further determining whether there is condensation in an air blower module radiator; and (S3) if there is condensation in the air blower module radiator, adjusting an air gear of the fresh air blower or a target superheating degree of the fresh air blower according to the current operation mode so as to eliminate the condensation on the air blower module radiator.

## Description

### TECHNICAL FIELD

The present disclosure relates to the field of air conditioning technologies, and more particularly, to a method for controlling a fresh air machine, a non-transitory computer readable storage medium, a device for controlling a fresh air machine, and a fresh air machine having the device for controlling a fresh air machine.

### BACKGROUND

With the rapid development of China's economy and the improvement of people's living standards, air conditioners are widely used in people's daily life. Based on people's requirements for health and environment protection, fresh air machines are favored by the market for their ability to introduce fresh air with higher quality.

However, due to the unique outdoor air returning characteristic of the fresh air machine system, its structure, function and characteristic are quite different from those of the ordinary indoor machine. For example, the large-capacity indoor machine such as the fresh air machine or the high static pressure has the fan module, and other indoor machines do not have the fan module, this brings the problem unique to such large-capacity indoor machines, such as condensation on the fan module. Once the problem occurs, the reliability of the fresh air machine will be greatly affected, and user experience will be affected.

### SUMMARY

Embodiments of the present disclosure aim to solve at least one of the technical problems in the related art to at least some extent. Accordingly, a first objective of the present disclosure is to provide a method for controlling a fresh air machine, when there is condensation on the fan module radiator, the wind level or the target overheat degree of the fresh air machine can be adjusted according to the current operation mode of the fresh air machine, to remove the condensation on the fan module radiator, such that the fresh air machine can be reliably operated, and the user satisfaction can be effectively improved.

A second objective of the present disclosure is to provide a non-transitory computer readable storage medium.

A third objective of the present disclosure is to provide a device for controlling a fresh air machine.

A fourth objective of the present disclosure is to provide a fresh air machine.

To achieve the above objectives, embodiments of a first aspect of the present disclosure provide a method for controlling a fresh air machine. The fresh air machine includes a fan module and a fan module radiator arranged corresponding to the fan module. The method includes: obtaining a current operation mode of the fresh air machine, and determining whether the current operation mode is one of a refrigeration mode or a delivery air mode; determining whether there is condensation on the fan module radiator in response to determining that the current operation mode is the refrigeration mode or the delivery air mode; and in response to determining that there is the condensation on the fan module radiator, adjusting a wind level of the fresh air machine or a target overheat degree of the fresh air machine based on the current operation mode, to remove the condensation on the fan module radiator.

With the method for controlling a fresh air machine according to embodiments of the present disclosure, the current operation mode of the fresh air machine is obtained, it is determined whether the current operation mode is one of the refrigeration mode or the delivery air mode, in response to determining that the current operation mode is the refrigeration mode or the delivery air mode, it is further determined whether there is condensation on the fan module radiator, and in response to determining that there is the condensation on the fan module radiator, the wind level of the fresh air machine or the target overheat degree of the fresh air machine is adjusted based on the current operation mode to remove the condensation on the fan module radiator, such that the fresh air machine can be reliably operated, and the user satisfaction can be effectively improved.

In an embodiment of the present disclosure, determining whether there is the condensation on the fan module radiator includes: obtaining a current indoor ambient temperature, a current indoor ambient humidity, and a temperature of the fan module radiator; obtaining a current indoor dew point temperature based on the current indoor ambient temperature and the current indoor ambient humidity, and calculating a temperature difference between the temperature of the fan module radiator and the current indoor dew point temperature; determining whether the temperature difference is less than a first preset temperature value and lasts for a first preset time; and determining that there is the condensation on the fan module radiator in response to determining that the temperature difference is less than the first preset temperature value and lasts for the first preset time.

In an embodiment of the present disclosure, adjusting the wind level of the fresh air machine or the target overheat degree of the fresh air machine based on the current operation mode includes: in response to determining that the current operation mode is the refrigeration mode, increasing the target overheat degree of the fresh air machine by a first preset value every second preset time, until the temperature difference between the temperature of the fan module radiator and the current indoor dew point temperature is greater than or equal to the first preset temperature value and lasts for the first preset time, or until the target overheat degree of the fresh air machine reaches a maximum target overheat degree.

In an embodiment of the present disclosure, adjusting the wind level of the fresh air machine or the target overheat degree of the fresh air machine based on the current operation mode includes: in response to determining that the current operation mode is the delivery air mode, increasing the wind level of the fresh air machine by a first preset level every second preset time, until the temperature difference between the temperature of the fan module radiator and the current indoor dew point temperature is greater than or equal to the first preset temperature value and lasts for the first preset time, or until the wind level of the fresh air machine reaches a maximum wind level.

To achieve the above objectives, embodiments of a second aspect of the present disclosure provide a non-transitory computer readable storage medium having stored thereon computer programs that, when executed by a processor, cause the method for controlling a fresh air machine to be implemented.

With the non-transitory computer readable storage medium according to embodiments of the present disclosure, by performing the above method for controlling a fresh air machine, when there is condensation on the fan module radiator, the wind level or the target overheat degree of the fresh air machine may be adjusted according to the current operation mode of the fresh air machine, to remove the condensation on the fan module radiator, such that the fresh air machine can be reliably operated, and the user satisfaction can be effectively improved.

To achieve the above objectives, embodiments of a third aspect of the present disclosure provide a device for controlling a fresh air machine. The fresh air machine includes a fan module and a fan module radiator arranged corresponding to the fan module. The device includes a first obtaining module, a determining module, and a control module. The first obtaining module is configured to obtain a current operation mode of the fresh air machine. The determining module is configured to determine whether the current operation mode is one of a refrigeration mode or a delivery air mode, and to determine whether there is condensation on the fan module radiator in response to determining that the current operation mode is the refrigeration mode or the delivery air mode. The control module is connected to the determining module, and is configured to, in response to determining that there is the condensation on the fan module radiator, adjust a wind level of the fresh air machine or a target overheat degree of the fresh air machine based on the current operation mode, to remove the condensation on the fan module radiator.

With the device for controlling a fresh air machine according to embodiments of the present disclosure, the first obtaining module obtains the current operation mode of the fresh air machine, the determining module determines whether the current operation mode is one of the refrigeration mode or the delivery air mode, in response to determining that the current operation mode is the refrigeration mode or the delivery air mode, the determining module further determines whether there is condensation on the fan module radiator, and in response to determining that there is the condensation on the fan module radiator, the control module adjusts adjust the wind level of the fresh air machine or the target overheat degree of the fresh air machine based on the current operation mode, to remove the condensation on the fan module radiator, such that the fresh air machine can be reliably operated, and the user satisfaction can be effectively improved.

In an embodiment of the present disclosure, the device further includes a second obtaining module. The second obtaining module is configured to obtain a current indoor ambient temperature, a current indoor ambient humidity, and a temperature of the fan module radiator. The determining module is configured to: obtain a current indoor dew point temperature based on the current indoor ambient temperature and the current indoor ambient humidity, and calculate a temperature difference between the temperature of the fan module radiator and the current indoor dew point temperature; determine whether the temperature difference is less than a first preset temperature value and lasts for a first preset time; and determine that there is the condensation on the fan module radiator in response to determining that the temperature difference is less than the first preset temperature value and lasts for the first preset time.

In an embodiment of the present disclosure, when the control module is configured to adjust the wind level of the fresh air machine or the target overheat degree of the fresh air machine based on the current operation mode, the control module is configured to: in response to determining that the current operation mode is the refrigeration mode, increase the target overheat degree of the fresh air machine by a first preset value every second preset time, until the temperature difference between the temperature of the fan module radiator and the current indoor dew point temperature is greater than or equal to the first preset temperature value and lasts for the first preset time, or until the target overheat degree of the fresh air machine reaches a maximum target overheat degree.

In an embodiment of the present disclosure, when the control module is configured to adjust the wind level of the fresh air machine or the target overheat degree of the fresh air machine based on the current operation mode, the control module is configured to: in response to determining that the current operation mode is the delivery air mode, increase the wind level of the fresh air machine by a first preset level every second preset time, until the temperature difference between the temperature of the fan module radiator and the current indoor dew point temperature is greater than or equal to the first preset temperature value and lasts for the first preset time, or until the wind level of the fresh air machine reaches a maximum wind level.

To achieve the above objectives, embodiments of a fourth aspect of the present disclosure provide a fresh air machine. The fresh air machine includes the above device for control a fresh air machine.

With the fresh air machine according to embodiments of the present disclosure, based on the above device, when there is condensation on the fan module radiator, the wind level or the target overheat degree of the fresh air machine can be adjusted according to the current operation mode of the fresh air machine, to remove the condensation on the fan module radiator, such that the fresh air machine can be reliably operated, and the user satisfaction can be effectively improved.

### BRIEF DESCRIPTION OF THE DRAWINGS

Fig. 1 is a flow chart of a method for controlling a fresh air machine according to an embodiment of the present disclosure;
Fig. 2 is a schematic diagram of an arrangement position of a sensor according to an embodiment of the present disclosure;
Fig. 3 is a flow chart of a method for controlling a fresh air machine according to an embodiment of the present disclosure;
Fig. 4 is a block diagram of a device for controlling a fresh air machine according to an embodiment of the present disclosure; and
Fig. 5 is a block diagram of a device for controlling a fresh air machine according to another embodiment of the present disclosure.

### DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. The embodiments described herein with reference to the accompanying drawings are exemplary, which are used to explain the present disclosure, and shall not be construed to limit the present disclosure.

The method for controlling a fresh air machine, the non-transitory computer readable storage medium, the device for controlling a fresh air machine, and the fresh air machine including the device for controlling a fresh air machine will be described below with reference to the accompanying drawings.

In an embodiment of the present disclosure, the fresh air machine may include a fan module and a fan module radiator arranged corresponding to the fan module. The fan module is arranged in the electric control box of the fresh air machine. A side of the fan module radiator is arranged in the electric control box, and the other side of the fan module radiator is exposed in the box on the delivery air side of the fresh air machine. The fan module is arranged on the fan module radiator, such that the fan module radiator can radiate the heat of the fan module.

When the fresh air machine performs refrigerant operation in the indoor environment with high humidity, the outlet temperature of the fresh air machine may be lower, such that the fan module may be cooled, and the outlet wind with the lower temperature may also be transmitted to the fan module radiator close to one side of the fan module. Since the thermal conductivity of the fan module radiator is better, its surface temperature can be greatly reduced, when the surface temperature is less than the indoor dew point temperature, condensation may occur on the fan module radiator, and the condensation may drip into or flow into the electric control box, causing short circuit, component damage, and even fire or other accidents in serious cases. Therefore, when it is determined that the fan module radiator is about to condense, it is necessary to take corresponding measures to prevent the condensation from continuing to occur, to avoid the above dangerous situation, and ensure the safe and reliable operation of the fresh air machine.

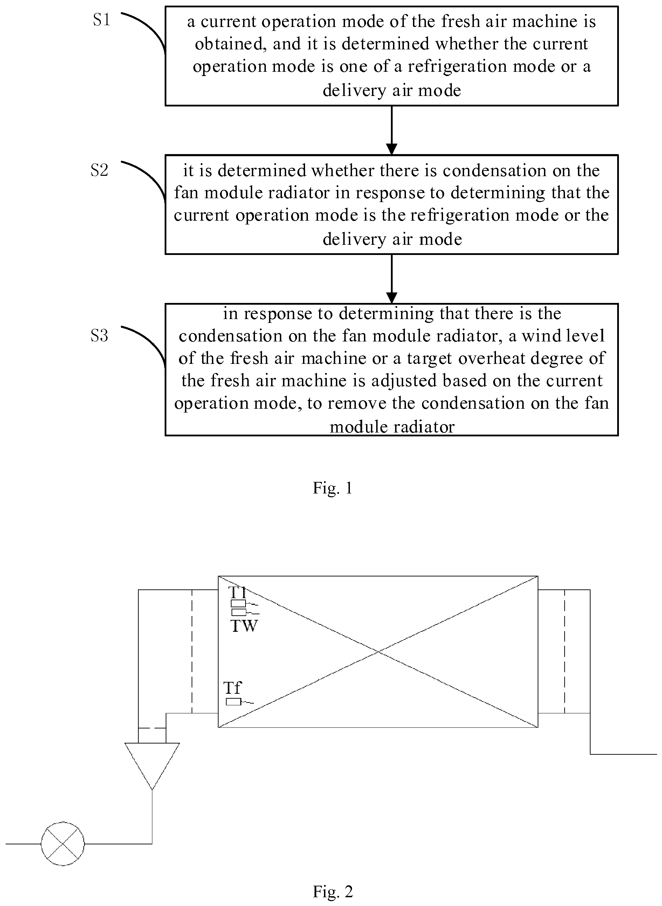

Fig. 1 is a flow chart of a method for controlling a fresh air machine according to an embodiment of the present disclosure. As illustrated in Fig. 1, the method according the embodiment of the present disclosure may include the followings.

At block S1, a current operation mode of the fresh air machine is obtained, and it is determined whether the current operation mode is one of a refrigeration mode or a delivery air mode.

At block S2, it is determined whether there is condensation on the fan module radiator in response to determining that the current operation mode is the refrigeration mode or the delivery air mode.

Specifically, according to the foregoing analysis, it is known that, when the surface temperature of the fan module radiator is less than the indoor dew point temperature, the condensation may occur on the fan module radiator. Therefore, in the present disclosure, the risk of occurrence of condensation on the fan module radiator (i.e., determining whether there is the condensation on the fan module radiator) can be determined based on the surface temperature of the fan module radiator and the indoor dew point temperature.

According to an embodiment of the present disclosure, determining whether there is the condensation on the fan module radiator may include: obtaining a current indoor ambient temperature, a current indoor ambient humidity, and a temperature of the fan module radiator; obtaining a current indoor dew point temperature based on the current indoor ambient temperature and the current indoor ambient humidity, and calculating a temperature difference between the temperature of the fan module radiator and the current indoor dew point temperature; determining whether the temperature difference is less than a first preset temperature value and lasts for a first preset time; and determining that there is the condensation on the fan module radiator in response to determining that the temperature difference is less than the first preset temperature value and lasts for the first preset time. The first preset temperature value and the first preset time may be calibrated according to actual conditions.

Specifically, as illustrated in Fig. 2, the current indoor ambient temperature T1 and the current indoor ambient humidity TW may be obtained by the indoor temperature sensor and the indoor humidity sensor, respectively (or T1 and TW may be obtained by the indoor temperature/humidity sensor), and the temperature Tf (i.e., the surface temperature) of the fan module radiator may be obtained by the temperature sensor disposed on the fan module radiator. Then, the current indoor dew point temperature Td can be calculated based on T1 and TW, and the difference between Tf and Td can be calculated, and the difference (Tf-Td) can be determined. When the difference (Tf-Td) is less than the first preset temperature value ΔT, and the state in which the difference (Tf-Td) is less than the first preset temperature value ΔT lasts for the first preset time T, it can be indicated that the temperature of the fan module radiator is far less than the current indoor dew point temperature, and it can be determined that there may be condensation on the fan module radiator. Otherwise, it can be determined that there may not be condensation on the fan module radiator.

At block S13, in response to determining that there is the condensation on the fan module radiator, a wind level of the fresh air machine or a target overheat degree of the fresh air machine is adjusted based on the current operation mode, to remove the condensation on the fan module radiator.

Specifically, when it is determined that there is condensation on the fan module radiator, the condensation on fan module radiator may be removed by increasing the temperature of the fan module radiator, since the operation mode of the fresh air machine may be different, the way to increase the temperature of the fan module radiator may also vary.

For example, when the current operation mode of the fresh air machine is the delivery air mode, the compressor does not operate, in this case, the temperature of the fan module radiator may be increased by adjusting the fan speed of the fresh air machine. When the current operation mode of the fresh air machine is the refrigeration mode, the compressor operates, in this case, the temperature of the fan module radiator may be increased by adjusting the indoor refrigerant capacity. Since, during the refrigerating process, the refrigerant flowing into the fresh air machine is controlled according to the target overheat degree of the evaporator in the fresh air machine, the temperature of the fan module radiator may be increased by adjusting the target overheat degree of the evaporator.

The adjustment of the wind level (the wind level of the fan of the fresh air machine) of the fresh air machine to remove the condensation on the fresh air machine will be described below when the current operation mode of the fresh air machine is the delivery air mode.

According to an embodiment of the present disclosure, adjusting the wind level of the fresh air machine or the target overheat degree of the fresh air machine based on the current operation mode includes: in response to determining that the current operation mode is the delivery air mode, increasing the wind level of the fresh air machine by a first preset level every second preset time, until the temperature difference between the temperature of the fan module radiator and the current indoor dew point temperature is greater than or equal to the first preset temperature value and lasts for the first preset time, or until the wind level of the fresh air machine reaches a maximum wind level. The second preset time and the first preset level may be calibrated according to actual conditions.

Specifically, when the current operation mode of the fresh air machine is the delivery air mode, and there is the condensation on the fan module radiator, the temperature of the fan module radiator may be increased by increasing the wind level of the fresh air machine, such that the temperature of the fan module radiator can be close to greater than the indoor dew point temperature, to remove the condensation water on the fan module radiator. For example, the wind level of the fresh air machine may be increased by the first preset level (such as 1 level) every second preset time, until the difference (Tf-Td) is greater than or equal to the first preset temperature value ΔT, and the state in which the difference (Tf-Td) is greater than or equal to the first preset temperature value ΔT lasts for the first preset time T, or unit the wind level of the fresh air machine reaches the maximum wind level (which may be determined according to the specification of the air machine), the adjustment of the wind level of the fresh air machine can be stopped, and the fan of the fresh air machine can be operated in the current wind level.

The adjustment of the target overheat degree of the fresh air machine to remove the condensation on the fresh air machine will be described below when the current operation mode of the fresh air machine is the refrigeration mode.

According to an embodiment of the present disclosure, adjusting the wind level of the fresh air machine or the target overheat degree of the fresh air machine based on the current operation mode includes: in response to determining that the current operation mode is the refrigeration mode, increasing the target overheat degree of the fresh air machine by a first preset value every second preset time, until the temperature difference between the temperature of the fan module radiator and the current indoor dew point temperature is greater than or equal to the first preset temperature value and lasts for the first preset time, or until the target overheat degree of the fresh air machine reaches a maximum target overheat degree. The first preset value may be calibrated according to actual conditions.

Specifically, when the current operation mode is the refrigeration mode, and there is the condensation on the fan module radiator, the temperature of the fan module radiator may be increased by increasing the target overheat degree of the evaporator to remove the condensation water on the fan module radiator. For example, the target overheat degree of the evaporator may be increased by the first preset value (such as 1°C) every second preset time, until the difference (Tf-Td) is greater than or equal to the first preset temperature value ΔT and lasts for the first preset time T, or unit the target overheat degree of the evaporator reaches the maximum target overheat degree (the maximum target overheat degree allowed during normal operation of the fresh air machine), the adjustment of the target overheat degree of the evaporator can be stopped, and the fresh air machine can be controlled to operate in the current target overheat degree.

The target overheat degree of the evaporator may be default target overheat degree when shipped from the factory, or the target overheat degree sent by the outdoor machine or the central controller during the refrigeration operation of the fresh air machine, or the target overheat degree calculated based on the saturation temperature corresponding to the outlet temperature and the outlet pressure, by obtaining the outlet temperature and the outlet pressure of the evaporator, which is not limited herein.

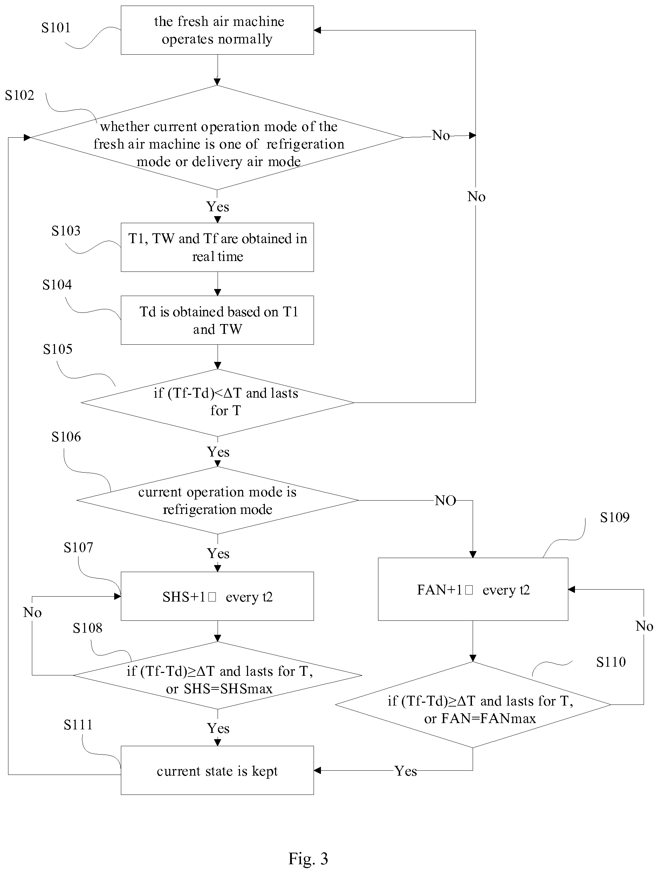

Fig. 3 is a flow chart of a method for controlling a fresh air machine according to an embodiment of the present disclosure. As illustrated in Fig. 3, the method according to the embodiment of the present disclosure may include the followings.

At block S101, the fresh air machine operates normally.

At block S102, it is determined whether the current operation mode of the fresh air machine is one of a refrigeration mode or a delivery air mode. If yes, go to block S103, if no, go to block S101.

At block S103, the current indoor ambient temperature T1, the current indoor ambient humidity TW and the temperature of the fan module radiator Tf are obtained in real time.

At block S104, the current indoor dew point temperature Td is obtained based on T1 and TW.

At block S105, it is determined whether (Tf-Td) is less than the first preset value ΔT and lasts for the first preset time T. If yes, go to block S106, if no, go to block S101.

At block S106, it is determined whether the current operation mode is the refrigeration mode. If yes, go to block S107, if no, go to block S109.

At block S107, the target overheat degree SHS of the fresh air machine is increased by a first preset value (such as 1°C) every second preset time t2.

At block S108, it is determined whether (Tf-Td) is greater than or equal to the first preset value ΔT and lasts for the first preset time T, or whether the target overheat degree SHS is equal to the maximum target overheat degree SHSmax. If yes, go to block Sill, if no, go to block S107.

At block S109, the wind level FAN of the fresh air machine is increased by a first preset level (such as 1 level) every second preset time t2.

At block S110, it is determined whether (Tf-Td) is greater than or equal to the first preset value ΔT and lasts for the first preset time T, or whether the wind level FAN is equal to the maximum wind level FANmax. If yes, got o block S111, if no, go to block S109.

At block Sill, the current state is kept.

Specifically, when the fresh air machine operates in the refrigeration mode, and the fan of fresh air machine is in the on state, the condensation on the fan module radiator can be removed by adjusting the target overheat degree of the evaporator and the fan wind level of the fresh air machine. For example, the fan wind level may be adjusted first, and then the target overheat degree of the evaporator is adjusted, which will not be described in detail here.

In summary, with the method for controlling a fresh air machine according to embodiments of the present disclosure, the current operation mode of the fresh air machine is obtained, it is determined whether the current operation mode is one of the refrigeration mode or the delivery air mode, in response to determining that the current operation mode is the refrigeration mode or the delivery air mode, it is further determined whether there is condensation on the fan module radiator, and in response to determining that there is the condensation on the fan module radiator, the wind level of the fresh air machine or the target overheat degree of the fresh air machine is adjusted based on the current operation mode to remove the condensation on the fan module radiator, such that the fresh air machine can be reliably operated, and the user satisfaction can be effectively improved.

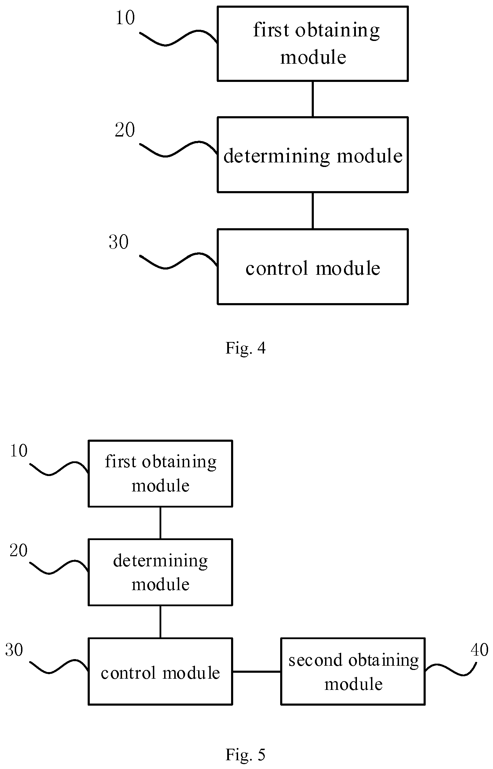

Fig. 4 is a block diagram of a device for controlling a fresh air machine according to an embodiment of the present disclosure. In the embodiment of the present disclosure, the fresh air machine includes a fan module and a fan module radiator arranged corresponding to the fan module.

As illustrated in Fig. 4, in the embodiment of the present disclosure, the device may include a first obtaining module 10, a determining module 20, and a control module 30.

The first obtaining module 10 is configured to obtain a current operation mode of the fresh air machine. The determining module 20 is configured to determine whether the current operation mode is one of a refrigeration mode or a delivery air mode, and to determine whether there is condensation on the fan module radiator in response to determining that the current operation mode is the refrigeration mode or the delivery air mode. The control module 30 is connected to the determining module 20, and is configured to, in response to determining that there is the condensation on the fan module radiator, adjust a wind level of the fresh air machine or a target overheat degree of the fresh air machine based on the current operation mode, to remove the condensation on the fan module radiator.

In an embodiment of the present disclosure, as shown in Fig. 5, the device further includes a second obtaining module 40. The second obtaining module 40 is configured to obtain a current indoor ambient temperature, a current indoor ambient humidity, and a temperature of the fan module radiator. The determining module 20 is configured to: obtain a current indoor dew point temperature based on the current indoor ambient temperature and the current indoor ambient humidity, and calculate a temperature difference between the temperature of the fan module radiator and the current indoor dew point temperature; determine whether the temperature difference is less than a first preset temperature value and lasts for a first preset time; and determine that there is the condensation on the fan module radiator in response to determining that the temperature difference is less than the first preset temperature value and lasts for the first preset time.

In an embodiment of the present disclosure, when the control module 30 is configured to adjust the wind level of the fresh air machine or the target overheat degree of the fresh air machine based on the current operation mode, the control module 30 is configured to: in response to determining that the current operation mode is the refrigeration mode, increase the target overheat degree of the fresh air machine by a first preset value every second preset time, until the temperature difference between the temperature of the fan module radiator and the current indoor dew point temperature is greater than or equal to the first preset temperature value and lasts for the first preset time, or until the target overheat degree of the fresh air machine reaches a maximum target overheat degree.

In an embodiment of the present disclosure, when the control module 30 is configured to adjust the wind level of the fresh air machine or the target overheat degree of the fresh air machine based on the current operation mode, the control module 30 is configured to: in response to determining that the current operation mode is the delivery air mode, increase the wind level of the fresh air machine by a first preset level every second preset time, until the temperature difference between the temperature of the fan module radiator and the current indoor dew point temperature is greater than or equal to the first preset temperature value and lasts for the first preset time, or until the wind level of the fresh air machine reaches a maximum wind level.

It should be noted that, for details not disclosed in the device for controlling a fresh air machine in the embodiment of the present disclosure, reference may be made to the details of the method for controlling a fresh air machine according to the embodiment of the present disclosure, and details are not described herein again.

With the device for controlling a fresh air machine according to embodiments of the present disclosure, the first obtaining module obtains the current operation mode of the fresh air machine, the determining module determines whether the current operation mode is one of the refrigeration mode or the delivery air mode, in response to determining that the current operation mode is the refrigeration mode or the delivery air mode, the determining module further determines whether there is condensation on the fan module radiator, and in response to determining that there is the condensation on the fan module radiator, the control module adjusts adjust the wind level of the fresh air machine or the target overheat degree of the fresh air machine based on the current operation mode, to remove the condensation on the fan module radiator, such that the fresh air machine can be reliably operated, and the user satisfaction can be effectively improved.

In addition, embodiments of the present disclosure further provide a non-transitory computer readable storage medium having stored thereon computer programs that, when executed by a processor, causes the method for controlling a fresh air machine to be implemented.

With the non-transitory computer readable storage medium according to embodiments of the present disclosure, by performing the above method for controlling a fresh air machine, when there is condensation on the fan module radiator, the wind level or the target overheat degree of the fresh air machine may be adjusted according to the current operation mode of the fresh air machine, to remove the condensation on the fan module radiator, such that the fresh air machine can be reliably operated, and the user satisfaction can be effectively improved.

In addition, embodiments of the present disclosure further provide a fresh air machine. The fresh air machine includes the above device for control a fresh air machine.

With the fresh air machine according to embodiments of the present disclosure, based on the above device, when there is condensation on the fan module radiator, the wind level or the target overheat degree of the fresh air machine can be adjusted according to the current operation mode of the fresh air machine, to remove the condensation on the fan module radiator, such that the fresh air machine can be reliably operated, and the user satisfaction can be effectively improved.

It should be understood that, each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

In addition, in the description of the present disclosure, terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial" and "peripheral" should be construed to refer to the orientation as then described or as shown in the drawings under discussion. These relative terms are for convenience of description and do not require that the present disclosure be constructed or operated in a particular orientation, therefore cannot be construed to limit the present disclosure.

In addition, terms such as "first" and "second" are used herein for purposes of description and are not intended to indicate or imply relative importance or significance or to imply the number of indicated technical features. Thus, the feature defined with "first" and "second" may explicitly or implicitly comprises one or more of the features. In the description of the present disclosure, "a plurality of' means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature; while a first feature "below," "under," or "on bottom of' a second feature may include an embodiment in which the first feature is right or obliquely "below," "under," or "on bottom of' the second feature, or just means that the first feature is at a height lower than that of the second feature.

Reference throughout this specification to "an embodiment," "some embodiments," "one embodiment," "an example," "a specific example," or "some examples" means that a particular feature, structure, material, or characteristic described in connection with the embodiment or example are included in at least one embodiment or example of the present disclosure. In the specification, expressions of the above terms do not need for same embodiments or examples. Furthermore, the feature, structure, material, or characteristic described can be incorporated in a proper way in any one or more embodiments or examples. In addition, under non-conflicting condition, those skilled in the art can incorporate or combine features described in different embodiments or examples.

Although explanatory embodiments have been shown and described, it would be appreciated that the above embodiments are exemplary and cannot be construed to limit the present disclosure, and changes, amendments, alternatives and modifications can be made in the embodiments by those skilled in the art without departing from spirit, principles and scope of the present disclosure.

## Claims

1. A method for controlling a fresh air machine, wherein the fresh air machine comprises a fan module and a fan module radiator arranged corresponding to the fan module, the method comprises:
obtaining a current operation mode of the fresh air machine, and determining whether the current operation mode is one of a refrigeration mode or a delivery air mode;
determining whether there is condensation on the fan module radiator in response to determining that the current operation mode is the refrigeration mode or the delivery air mode; and
in response to determining that there is the condensation on the fan module radiator, adjusting a wind level of the fresh air machine or a target overheat degree of the fresh air machine based on the current operation mode, to remove the condensation on the fan module radiator.

2. The method of claim 1, wherein determining whether there is the condensation on the fan module radiator comprises:
obtaining a current indoor ambient temperature, a current indoor ambient humidity, and a temperature of the fan module radiator;
obtaining a current indoor dew point temperature based on the current indoor ambient temperature and the current indoor ambient humidity, and calculating a temperature difference between the temperature of the fan module radiator and the current indoor dew point temperature;
determining whether the temperature difference is less than a first preset temperature value and lasts for a first preset time; and
determining that there is the condensation on the fan module radiator in response to determining that the temperature difference is less than the first preset temperature value and lasts for the first preset time.

3. The method of claim 2, wherein adjusting the wind level of the fresh air machine or the target overheat degree of the fresh air machine based on the current operation mode comprises:
in response to determining that the current operation mode is the refrigeration mode, increasing the target overheat degree of the fresh air machine by a first preset value every second preset time, until the temperature difference between the temperature of the fan module radiator and the current indoor dew point temperature is greater than or equal to the first preset temperature value and lasts for the first preset time, or until the target overheat degree of the fresh air machine reaches a maximum target overheat degree.

4. The method of claim 2, wherein adjusting the wind level of the fresh air machine or the target overheat degree of the fresh air machine based on the current operation mode comprises:
in response to determining that the current operation mode is the delivery air mode, increasing the wind level of the fresh air machine by a first preset level every second preset time, until the temperature difference between the temperature of the fan module radiator and the current indoor dew point temperature is greater than or equal to the first preset temperature value and lasts for the first preset time, or until the wind level of the fresh air machine reaches a maximum wind level.

5. A non-transitory computer readable storage medium having stored thereon computer programs that, when executed by a processor, cause the method for controlling a fresh air machine according to any one of claims 1 to 4 to be implemented.

6. A device for controlling a fresh air machine, wherein the fresh air machine comprises a fan module and a fan module radiator arranged corresponding to the fan module, the device comprises:
a first obtaining module, configured to obtain a current operation mode of the fresh air machine;
a determining module, configured to determine whether the current operation mode is one of a refrigeration mode or a delivery air mode, and to determine whether there is condensation on the fan module radiator in response to determining that the current operation mode is the refrigeration mode or the delivery air mode; and
a control module, connected to the determining module, and configured to, in response to determining that there is the condensation on the fan module radiator, adjust a wind level of the fresh air machine or a target overheat degree of the fresh air machine based on the current operation mode, to remove the condensation on the fan module radiator.

7. The device of claim 6, further comprising:
a second obtaining module, configured to obtain a current indoor ambient temperature, a current indoor ambient humidity, and a temperature of the fan module radiator;
wherein the determining module is configured to:
obtain a current indoor dew point temperature based on the current indoor ambient temperature and the current indoor ambient humidity, and calculate a temperature difference between the temperature of the fan module radiator and the current indoor dew point temperature;
determine whether the temperature difference is less than a first preset temperature value and lasts for a first preset time; and
determine that there is the condensation on the fan module radiator in response to determining that the temperature difference is less than the first preset temperature value and lasts for the first preset time.

8. The device of claim 7, wherein when the control module is configured to adjust the wind level of the fresh air machine or the target overheat degree of the fresh air machine based on the current operation mode, the control module is configured to:
in response to determining that the current operation mode is the refrigeration mode, increase the target overheat degree of the fresh air machine by a first preset value every second preset time, until the temperature difference between the temperature of the fan module radiator and the current indoor dew point temperature is greater than or equal to the first preset temperature value and lasts for the first preset time, or until the target overheat degree of the fresh air machine reaches a maximum target overheat degree.

9. The device of claim 7, wherein when the control module is configured to adjust the wind level of the fresh air machine or the target overheat degree of the fresh air machine based on the current operation mode, the control module is configured to:
in response to determining that the current operation mode is the delivery air mode, increase the wind level of the fresh air machine by a first preset level every second preset time, until the temperature difference between the temperature of the fan module radiator and the current indoor dew point temperature is greater than or equal to the first preset temperature value and lasts for the first preset time, or until the wind level of the fresh air machine reaches a maximum wind level.

10. A fresh air machine, comprising the device for control a fresh air machine according to any one of claims 6 to 9.
